# EUROPÄISCHE PATENTANMELDUNG

(11) **EP 1 462 796 A2**
(43) Veröffentlichungstag der Anmeldung: **29.09.2004**
(21) Anmeldenummer: 04006679.7
(22) Anmeldetag: 19.03.2004
(51) Int. Cl.: G01N 27/407

(54) **Gassensor und Verfahren zur Herstellung eines Gassensors**

(30) Priorität: 24.03.2003 DE 10313064
(71) Anmelder: Webasto AG, 82131 Stockdorf (DE)
(72) Erfinder: Käding, Stefan, Dr., 17309 Zerrenthin (DE)
(74) Vertreter: Bedenbecker, Markus

(57) **Zusammenfassung**

Die Erfindung betrifft einen Gassensor zur Bestimmung der Konzentration einer Gaskomponente eines Messgases, insbesondere eines Messgases, das durch einen Verbrennungs- oder Reformierungsprozess gebildet wird, wobei der Gassensor einen Schichtaufbau aufweist und eine Referenzelektrode (10) sowie eine dem Messgas auszusetzende katalytisch aktive Arbeitselektrode (12) umfasst.

Erfindungsgemäß ist vorgesehen, dass die Referenzelektrode (10) vollständig von gasdichtem Material (14, 16; 16, 18) umgeben ist.

## Beschreibung

Die Erfindung betrifft einen Gassensor zur Bestimmung der Konzentration einer Gaskomponente eines Messgases, insbesondere eines Messgases, das durch einen Verbrennungs- oder Reformierungsprozess gebildet wird, wobei der Gassensor einen Schichtaufbau aufweist und eine Referenzelektrode sowie eine dem Messgas auszusetzende katalytisch aktive Arbeitselektrode umfasst. Weiterhin betrifft die Erfindung Verfahren zur Herstellung eines Gassensors, der zur Bestimmung der Konzentration einer Gaskomponente eines Messgases vorgesehen ist, insbesondere eines Messgases, das durch einen Verbrennungs- oder Reformierungsprozess gebildet wird.

Die gattungsgemäßen Gassensoren können beispielsweise im Zusammenhang mit der Regelung von Verbrennungsprozessen von Verbrennungsmotoren oder Kraftfahrzeugstandheizungen eingesetzt werden. Weiterhin können die gattungsgemäßen Gassensoren bei allen Anwendungen zur Reformierung von Kohlenwasserstoffen eingesetzt werden, beispielsweise im Zusammenhang mit sogenannten Reformen, die Brennstoff und Luft zu einem Reformat umsetzen, durch das mit Hilfe einer Brennstoffzelle elektrische Energie gewonnen werden kann. Der zuletzt genannte Anwendungsfall gewinnt insbesondere im Zusammenhang mit sogenannten APUs (Auxilliary Power Units) an Bedeutung.

Ein gattungsgemäßer Gassensor ist beispielsweise aus der DE 198 24 316 A1 bekannt. Diese Druckschrift betrifft einen Gassensor zur Bestimmung von reduzierenden Gasen in Gasgemischen, insbesondere von HC und/oder CO in Abgasen von λ-geregelten Verbrennungsanlagen, mit einem Schichtaufbau, der eine elektrochemische Festkörperkette in Form eines potentiometrischen und/oder eines amperometrischen Messelementes mit einer Pumpzelle enthält. Für den Gassensor ist dabei ein Schichtaufbau gewählt, der eine Schicht aus sauerstoffspeicherndem Material aufweist, das bei λ < 1 Sauerstoff an die Messzelle abgibt und bei λ > 1 Sauerstoff zur Speicherung aufnimmt. Mit dem in der DE 198 24 316 A1 beschriebenen Gassensor soll erreicht werden, entweder mit Pumpzellen geringer Pumpleistung auszukommen oder, bei völligem Verzicht auf eine Pumpzelle, mit wenig Aufwand eine präzise Messung von reduzierenden Gasen auch im Bereich des stöchiometrischen Luft-/Kraftstoffverhältnisses λ durchzuführen, wobei λ zwischen 0,9 und 1,6 liegen kann.

Die gattungsgemäßen Gassensoren arbeiten üblicherweise mit einer Luft-Referenzelektrode oder weisen eine integrierte Luftkammer auf, was den Einbau und/oder den Aufbau des Gassensors kompliziert und damit teuer macht. Weiterhin ist der Messbereich von λ bei den gattungsgemäßen Gassensoren meist auf 0,9 bis 2 begrenzt; λ-Messungen in einem Bereich unterhalb von 0,7 sind in der Regel nicht möglich. Auch der Einsatz der gattungsgemäßen Gassensoren in Reformergasen ist nicht oder nur bedingt möglich. Wenn die Messung amperometrisch erfolgt, ist deren Auswertung aufwendig.

Der Erfindung liegt die Aufgabe zugrunde, die gattungsgemäßen Gassensoren derart weiterzubilden, dass sowohl der Aufals auch der Einbau vereinfacht wird, vorzugsweise bei einer gleichzeitigen Vergrößerung des möglichen Messbereichs.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Der erfindungsgemäße Gassensor baut auf dem gattungsgemäßen Stand der Technik dadurch auf, dass die Referenzelektrode vollständig von gasdichtem Material umgeben ist. Mit dem erfindungsgemäßen Gassensor ist es beispielsweise möglich, die Sauerstoffkonzentration in einem Messgas zu bestimmen, ohne dass die Referenzelektrode der Luft ausgesetzt werden muss. Weiterhin ist es möglich, das Luft/Brennstoffverhältnis zu detektieren, wobei die Arbeitstemperatur des erfindungsgemäßen Gassensors die in-situ-Messung in Synthesegasen und in Abgasen von Verbrennungsmotoren oder Standheizgeräten erlaubt.

Eine bevorzugte Weiterbildung des erfindungsgemäßen Gassensors sieht vor, dass das gasdichte Material zumindest abschnittsweise durch einen Festelektrolyt gebildet ist, mit dem sowohl die Referenzelektrode als auch die Arbeitselektrode in Verbindung steht. Dabei kommen sowohl Ausführungsformen in Betracht, bei denen die Referenzelektrode und die Arbeitselektrode auf dergleichen Seite des Festelektrolyten vorgesehen sind, als auch Ausführungsformen, bei denen die Referenzelektrode und die Arbeitselektrode auf unterschiedlichen Seiten des Festelektrolyten ausgebildet sind.

Im vorstehend erläuterten Zusammenhang ist vorzugsweise weiterhin vorgesehen, dass der Festelektrolyt durch ein oxidionenleitendes Material gebildet ist, insbesondere durch Yttrium-stabilisiertes Zirkoniumdioxid.

Zumindest bei bestimmten Ausführungsformen des erfindungsgemäßen Gassensors ist vorgesehen, dass das gasdichte Material zumindest abschnittsweise durch eine Abdeckschicht gebildet ist, insbesondere eine natriumarme Glasschicht. Beispielsweise können sowohl die Referenzelektrode als auch die Arbeitselektrode auf der Oberfläche eines Festelektrolyten nebeneinander, jedoch beabstandet zueinander ausgebildet werden, und anschließend kann die Referenzelektrode mit einer Schicht aus natriumarmen Glas abgedeckt werden.

Weiterhin kommen Ausführungsformen des erfindungsgemäßen Gassensors in Betracht, bei denen vorgesehen ist, dass das gasdichte Material zumindest abschnittsweise durch ein Trägermaterial gebildet ist, insbesondere ein elektrisch isolierendes Trägermaterial. Diese Lösung kommt beispielsweise in Betracht, wenn zunächst nur die Referenzelektrode auf dem Trägermaterial gebildet und anschließend von einer Festelektrolytschicht überzogen wird, auf der anschließend die Arbeitselektrode ausgebildet wird.

Bei vielen Anwendungsfällen des erfindungsgemäßen Gassensors wird bevorzugt, dass er eine Heizung aufweist. Die Heizung kann beispielsweise auf der den Elektroden gegenüberliegenden Seite des elektrisch isolierenden Trägermaterials aufgebracht werden. Dadurch kann eine ungewollte Beeinflussung der Elektrodenpotentiale durch die angelegte Heizspannung wirksam vermieden werden.

Bei bevorzugten Ausführungsformen des erfindungsgemäßen Gassensors ist vorgesehen, dass die Referenzelektrode zumindest einen Materialbestandteil aufweist, der aus der folgenden Gruppe ausgewählt ist: Metalle, Metalloxide sowie Gemische daraus.

Weiterhin wird bevorzugt, dass die Arbeitselektrode zumindest einen Materialbestandteil aufweist, der aus der folgenden Gruppe ausgewählt ist: Edelmetalle, Edelmetalllegierungen, Oxide, Oxidgemische sowie Gemische daraus.

Eine besonders bevorzugte Weiterbildung des erfindungsgemäßen Gassensors sieht vor, dass er nach einem potentiometrischen Messprinzip arbeitet. Bei dem potentiometrischen Messprinzip ist lediglich eine Spannungsmessung erforderlich, so dass sowohl die Messung als auch deren Auswertung in einfacher Weise durchgeführt werden kann.

Bei bevorzugten Ausführungsformen des erfindungsgemäßen Gassensors ist vorgesehen, dass er (auch) zur Messung von λ-Werten ausgelegt ist, die unter 0,9, bevorzugt unter 0,6 und weiter bevorzugt unter 0,4 liegen. Ein Vorteil des erfindungsgemäßen Gassensors besteht in der Möglichkeit, den Messbereich von λ zu variieren, und zwar durch eine Veränderung der katalytischen Aktivität der Arbeitselektrode bezüglich der Oxidation der Brenngase.

Eine erste Ausführungsform des erfindungsgemäßen Verfahrens ist durch die folgenden Schritt gekennzeichnet:
- Vorsehen einer Trägerschicht aus einem elektrisch isolierenden Material,
- Aufbringen einer Festelektrolytschicht auf der Trägerschicht,
- Ausbilden einer Referenzelektrode und einer Arbeitselektrode auf der Festelektrolytschicht, und
- Abdecken der Referenzelektrode mit einer gasdichten Abdeckschicht.
Eine zweite Ausführungsform des erfindungsgemäßen Verfahrens ist durch die folgenden Schritte gekennzeichnet:
- Vorsehen einer Trägerschicht aus einem elektrisch isolierenden Material,
- Ausbilden einer Referenzelektrode auf der Trägerschicht,
- Abdecken der Referenzelektrode mit einer gasdichten Festelektrolytschicht, und
- Ausbilden einer Arbeitselektrode auf der gasdichten Festelektrolytschicht.

Die erfindungsgemäßen Verfahren lassen sich durch den Einsatz verschiedener Produktionstechniken durchführen, beispielsweise Siebdruck und/oder Sputtertechniken. Die erfindungsgemäßen Verfahren ergeben einen Gassensor, der die vorstehend bereits erläuterten Vorteile aufweist, weshalb zur Vermeidung von Wiederholung auf die Ausführungen im Zusammenhang mit dem erfindungsgemäßen Gassensor verwiesen wird.

Gleiches gilt sinngemäß für die nachfolgend aufgeführten vorteilhaften Weiterbildungen der erfindungsgemäßen Verfahren, wobei auch diesbezüglich auf die entsprechenden Ausführungen im Zusammenhang mit der Erläuterung des erfindungsgemäßen Gassensors verwiesen wird.

Eine bevorzugte Weiterbildung der erfindungsgemäßen Verfahren sieht vor, dass elektrisch leitfähige Verbindungen zu der Referenzelektrode und der Arbeitselektrode gebildet werden.

Weiterhin wird auch in diesem Zusammenhang bevorzugt, dass die Festelektrolytschicht durch ein oxidionenleitendes Material gebildet ist, insbesondere durch Yttrium-stabilisiertes Zirkoniumdioxid.

Sofern vorgesehen, wird bevorzugt, dass die Abdeckschicht eine natriumarme Glasschicht ist.

Als weiterer Schritt der erfindungsgemäßen Verfahren kann vorgesehen sein:
- Ausbilden einer elektrischen Heizung auf einer von der Referenzelektrode und der Arbeitselektrode abgewandten Seite der Trägerschicht.

Auch im Zusammenhang mit dem erfindungsgemäßen Verfahren wird bevorzugt, dass für die Referenzelektrode zumindest ein Materialbestandteil verwendet wird, der aus der folgenden Gruppe ausgewählt ist: Metalle, Metalloxide sowie Gemische daraus.

Weiterhin wird es als vorteilhaft erachtet, dass für die Arbeitselektrode zumindest ein Materialbestandteil verwendet wird, der aus der folgenden Gruppe ausgewählt ist: Edelmetalle, Edelmetalllegierungen, Oxide, Oxidgemische sowie Gemische daraus.

Die erfindungsgemäßen Verfahren können in vorteilhafter Weise weiterhin den folgenden Schritt umfassen:
- Wählen der katalytischen Aktivität der Arbeitselektrode derart, dass der Gassensor (auch) zur Messung von λ-Werten geeignet ist, die unter 0,9, bevorzugt unter 0,6 und weiter bevorzugt unter 0,4 liegen.

Bevorzugte Ausführungsformen der Erfindung werden nachfolgend anhand der Zeichnungen beispielhaft erläutert.

Es zeigen:
- Figur 1: eine Schnittansicht einer ersten Ausführungsform des erfindungsgemäßen Gassensors, wobei diese Darstellung auch eine erste Ausführungsform des erfindungsgemäßen Verfahrens veranschaulicht, und
- Figur 2: eine Schnittansicht einer zweiten Ausführungsform des erfindungsgemäßen Gassensors, wobei diese Darstellung auch eine zweite Ausführungsform des erfindungsgemäßen Verfahrens veranschaulicht.

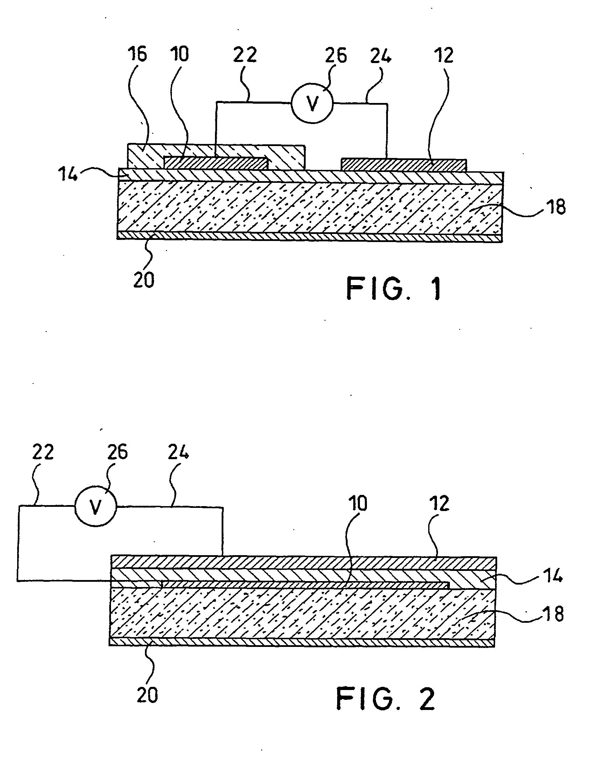

Die in Figur 1 dargestellte Ausführungsform des erfindungsgemäßen Gassensors lässt sich durch eine erste Ausführungsform des erfindungsgemäßen Verfahrens wie folgt herstellen: Zunächst wird eine Trägerschicht 18 aus einem elektrisch isolierenden Material vorgesehen, die beispielsweise aus einem keramischen Material bestehen kann. Anschließend wird eine Festelektrolytschicht 14 auf die Trägerschicht 18 aufgebracht, wobei die Festelektrolytschicht 14 insbesondere aus Yttrium-stabilisiertem Zirkoniumdioxid bestehen kann. Auf der Oberfläche der Festelektrolytschicht 14 wird dann eine Referenzelektrode 10 aus einem Metall oder Metalloxid gebildet. Eine Arbeitselektrode 12 aus einem Edelmetall, einer Edelmetalllegierung, einem Oxid oder einem Oxidgemisch wird ebenfalls auf der Festelektrolytschicht 14 gebildet. Anschließend wird die Referenzelektrode 10 durch eine Abdeckschicht 16 aus natriumarmem Glas abgedeckt. Elektrische Anschlüsse 22, 24 zu der Referenzelektrode 10 beziehungsweise der Arbeitselektrode 12 dienen dazu, mit Hilfe eines Spannungsmessers 26 einen Potentialunterschied bestimmen zu können. Die Heizung 20 kann zu irgendeinem geeigneten Zeitpunkt ausgebildet werden, insbesondere zu Beginn des Verfahrens.

Die Funktionsweise des in Figur 1 dargestellten Gassensors ist wie folgt: Mit Hilfe der integrierten Heizung 20 wird der Gassensor auf die Arbeitstemperatur aufgeheizt. Dadurch, dass die Heizung 20 auf der elektrisch isolierenden Trägerschicht 18 aufgebracht ist, kann eine Beeinflussung der Potentiale der Referenzelektrode 10 und der Arbeitselektrode 12 sicher verhindert werden. Die gasdichte Abdeckschicht 16 verhindert den Kontakt der Referenzelektrode 10 mit dem Messgas. Sobald die Arbeitstemperatur erreicht ist, stellt sich an der festen Referenzelektrode 10 ein Sauerstoffpartialdruck ein, der, thermodynamisch bestimmt, nur von der Temperatur abhängig ist. Die Arbeitselektrode 12 ist dem Messgas ausgesetzt. An dieser Elektrode stellt sich ein Sauerstoffpartialdruck ein, der der Zusammensetzung des Messgases entspricht. Durch die elektrische Verschaltung der Referenzelektrode 10 und der Arbeitselektrode 12 über den Festelektrolyten 14 kann der Unterschied der Elektrodenpotentiale zwischen der Referenzelektrode 10 und der Arbeitselektrode 12 als Zellspannung mit dem Spannungsmesser 26 gemessen werden. Diese Zellspannung kann insbesondere zur Berechung der Sauerstoffkonzentration in dem Messgas verwendet werden.

Für den Fall, dass das Messgas neben Sauerstoff auch Kohlenwasserstoffe, CO, H₂ oder andere brennbare Komponenten enthält, eignet sich der erfindungsgemäße Sensoraufbau zur Ermittlung des λ-Wertes. Dieser wird aus der Sauerstoffkonzentration in dem Messgas nach der vollständigen Verbrennung der brennbaren Komponenten im Abgas ermittelt. Die Verbrennung findet an beziehungsweise in der Nähe der Arbeitselektrode 12 statt, so dass sich an der Arbeitselektrode 12 ein Sauerstoffpartialdruck einstellen kann. Ein Vorteil der erfindungsgemäßen Gassensoranordnung ist die mögliche Variation des Messbereichs von λ. Diese Variation wird durch eine Veränderung der katalytischen Aktivität der Arbeitselektrode 12 bezüglich der Oxidation der Brenngase ermöglicht. Eine Erhöhung der katalytischen Aktivität führt dabei zu einer Vergrößerung des Messbereichs, vor allem für λ < 1.

Bei völliger Inaktivität der Arbeitselektrode 12 bezüglich der Oxidation der Brenngaskomponenten kann aus der erhaltenen Zellspannung die Sauerstoffkonzentration im Gas ermittelt werden.

Die in Figur 2 dargestellte Ausführungsform des erfindungsgemäßen Gassensors lässt sich durch eine zweite Ausführungsform des erfindungsgemäßen Verfahrens wie folgt herstellen: Zunächst wird eine Trägerschicht 18 aus einem elektrisch isolierenden Material vorgesehen, das beispielsweise ein keramisches Material sein kann. Anschließend wird eine aus einem Metall oder einem Metalloxid gebildete Referenzelektrode 10 auf der Trägerschicht 18 ausgebildet. Die Referenzelektrode 10 wird dann mit einer gasdichten Festelektrolytschicht 14 abgedeckt, die auch in diesem Fall insbesondere durch Yttrium-stabilisiertes Zirkoniumdioxid gebildet sein kann. Auf der gasdichten Festelektrolytschicht 14 wird anschließend die Arbeitselektrode 12 ausgebildet, die wieder aus einem Edelmetall, einer Edelmetalllegierung, einem Oxid oder einem Oxidgemisch bestehen oder derartige Materialien zumindest beinhalten kann. Auch in diesem Fall werden elektrische Anschlüsse 22, 24 zu der Referenzelektrode 10 beziehungsweise der Arbeitselektrode 12 vorgesehen, um mit einem Spannungsmesser 26 die Potentialdifferenz bestimmen zu können. Die bezogen auf die Darstellung unten vorgesehene Heizung 20 kann auch bei dieser Ausführungsform zu irgendeinem geeigneten Zeitpunkt vorgesehen werden, beispielsweise zu Beginn des Verfahrens.

Die Funktionsweise des in Figur 2 dargestellten Gassensors ist wie folgt: Zunächst wird das gesamte Gassensormodul mit der Heizung 20 auf Arbeitstemperatur gebracht. Sobald die Arbeitstemperatur erreicht ist, stellt sich an der festen Referenzelektrode 10 ein Elektrodenpotential ein, das, thermodynamisch bedingt, nur von der Temperatur abhängt.

Der gasdichte Festelektrolyt 14 verhindert einen Messgaszutritt an die Referenzelektrode 10. Die Arbeitselektrode 12 ist dem Messgas ausgesetzt. An ihr stellt sich ein Elektrodenpotential ein, das durch die Gaszusammensetzung im Messgas beeinflusst ist. Die Referenzelektrode 10 und die Arbeitselektrode 12 sind wieder durch den Festelektrolyten 14 zusammengeschaltet, wobei die Differenz der Elektrodenpotentiale mit einem Spannungsmesser 26 gemessen werden kann. Diese Gleichgewichtszellspannung kann auch in diesem Fall zur Bestimmung des Sauerstoffpartialdrucks oder λ benutzt werden. Im Übrigen wird auf die Beschreibung der Figur 1 verwiesen.

Die Erfindung ergibt insbesondere die folgenden Vorteile:
- Weiter λ-Bereich vor allem bei λ < 1 (Lambda-Messung bis zur Russgrenze möglich),
- gassymmetrischer Aufbau, das heißt beide Elektroden (Arbeits- und Referenzelektrode) befinden sich im Prüfgas,
- Variation der katalytischen Aktivität verändert den Messbereich,
- In-situ-Messung in Synthesegas möglich (λ < 0,4),
- Wegfall einer Luft-Referenzelektrode, deshalb kann auf das Spülen mit Luft verzichtet werden,
- potentiometrisches Sensorprinzip,
- Einfache Integration einer Temperaturmessung möglich,
- keine Querempfindlichkeit bei der λ-Bestimmung unter Vorraussetzung der vollständigen Verbrennung,
- einfacher Aufbau,
- planarer Aufbau,
- Verhinderung von Langzeitdrift durch Einsatz langzeitstabiler Materialien,
- bei ausreichend heißen Abgasen kann auf eine Heizung verzichtet werden,
- Einsatz verschiedener Produktionstechniken kombiniert möglich (Siebdruck oder Sputtertechnik).

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Referenzelektrode
- 12: Arbeitselektrode
- 14: Festelektrolytschicht
- 16: Abdeckschicht
- 18: Trägerschicht
- 20: Heizung
- 22: elektrischer Anschluss
- 24: elektrischer Anschluss
- 26: Spannungsmesser

## Patentansprüche

1. Gassensor zur Bestimmung der Konzentration einer Gaskomponente eines Messgases, insbesondere eines Messgases, das durch einen Verbrennungs- oder Reformierungsprozess gebildet wird, wobei der Gassensor einen Schichtaufbau aufweist und eine Referenzelektrode (10) sowie eine dem Messgas auszusetzende katalytisch aktive Arbeitselektrode (12) umfasst, **dadurch gekennzeichnet, dass** die Referenzelektrode (10) vollständig von gasdichtem Material (14, 16; 16, 18) umgeben ist.

2. Gassensor nach Anspruch 1, **dadurch gekennzeichnet, dass** das gasdichte Material zumindest abschnittsweise durch einen Festelektrolyt (16) gebildet ist, mit dem sowohl die Referenzelektrode (10) als auch die Arbeitselektrode (12) in Verbindung steht.

3. Gassensor nach Anspruch 1 oder 2, **dadurch gekennzeichnet, dass** der Festelektrolyt (14) durch ein oxidionenleitendes Material gebildet ist, insbesondere durch Yttrium-stabilisiertes Zirkoniumdioxid.

4. Gassensor nach einem der vorhergehenden Ansprüche, **dadurch gekennzeichnet, dass** das gasdichte Material zumindest abschnittsweise durch eine Abdeckschicht (16) gebildet ist, insbesondere eine natriumarme Glasschicht (16).

5. Gassensor nach einem der vorhergehenden Ansprüche, **dadurch gekennzeichnet, dass** das gasdichte Material zumindest abschnittsweise durch ein Trägermaterial (18) gebildet ist, insbesondere ein elektrisch isolierendes Trägermaterial (18).

6. Gassensor nach einem der vorhergehenden Ansprüche, **dadurch gekennzeichnet, dass** er eine Heizung (20) aufweist.

7. Gassensor nach einem der vorhergehenden Ansprüche, **dadurch gekennzeichnet, dass** die Referenzelektrode (10) zumindest einen Materialbestandteil aufweist, der aus der folgenden Gruppe ausgewählt ist: Metalle, Metalloxide sowie Gemische daraus.

8. Gassensor nach einem der vorhergehenden Ansprüche, **dadurch gekennzeichnet, dass** die Arbeitselektrode (12) zumindest einen Materialbestandteil aufweist, der aus der folgenden Gruppe ausgewählt ist: Edelmetalle, Edelmetalllegierungen, Oxide, Oxidgemische sowie Gemische daraus.

9. Gassensor nach einem der vorhergehenden Ansprüche, **dadurch gekennzeichnet, dass** er nach einem potentiometrischen Messprinzip arbeitet.

10. Gassensor nach einem der vorhergehenden Ansprüche, **dadurch gekennzeichnet, dass** er (auch) zur Messung von λ-Werten ausgelegt ist, die unter 0,9, bevorzugt unter 0,6 und weiter bevorzugt unter 0,4 liegen.

11. Verfahren zur Herstellung eines Gassensors, insbesondere eines Gassensors nach einem der Ansprüche 1 bis 10, der zur Bestimmung der Konzentration einer Gaskomponente eines Messgases vorgesehen ist, insbesondere eines Messgases, das durch einen Verbrennungs- oder Reformierungsprozess gebildet wird, **dadurch gekennzeichnet, dass** es die folgenden Schritte umfasst:
- Vorsehen einer Trägerschicht (18) aus einem elektrisch isolierenden Material,
- Aufbringen einer Festelektrolytschicht (14) auf der Trägerschicht (18),
- Ausbilden einer Referenzelektrode (10) und einer Arbeitselektrode (12) auf der Festelektrolytschicht (14), und
- Abdecken der Referenzelektrode (10) mit einer gasdichten Abdeckschicht (16).

12. Verfahren zur Herstellung eines Gassensors, insbesondere eines Gassensors nach einem der Ansprüche 1 bis 10, der zur Bestimmung der Konzentration einer Gaskomponente eines Messgases vorgesehen ist, insbesondere eines Messgases, das durch einen Verbrennungs- oder Reformierungsprozess gebildet wird, **dadurch gekennzeichnet, dass** es die folgenden Schritte umfasst:
- Vorsehen einer Trägerschicht (18) aus einem elektrisch isolierenden Material,
- Ausbilden einer Referenzelektrode (10) auf der Trägerschicht (18),
- Abdecken der Referenzelektrode (10) mit einer gasdichten Festelektrolytschicht (14), und
- Ausbilden einer Arbeitselektrode (12) auf der gasdichten Festelektrolytschicht (14).

13. Verfahren nach Anspruch 11 oder 12, **dadurch gekennzeichnet, dass** elektrisch leitfähige Verbindungen (22, 24) zu der Referenzelektrode (10) und der Arbeitselektrode (12) gebildet werden.

14. Verfahren nach einem der Ansprüche 11 bis 13, **dadurch gekennzeichnet, dass** die Festelektrolytschicht (14) durch ein oxidionenleitendes Material gebildet ist, insbesondere durch Yttrium-stabilisiertes Zirkoniumdioxid.

15. Verfahren nach Anspruch 11, 13 oder 14, **dadurch gekennzeichnet, dass** die Abdeckschicht (16) eine natriumarme Glasschicht (16) ist.

16. Verfahren nach einem der Ansprüche 11 bis 15, **dadurch gekennzeichnet, dass** es weiterhin den folgenden Schritt umfasst:
- Ausbilden einer elektrischen Heizung (20) auf einer von der Referenzelektrode (10) und der Arbeitselektrode (12) abgewandten Seite der Trägerschicht (18).

17. Verfahren nach einem der Ansprüche 11 bis 16 **dadurch gekennzeichnet, dass** für die Referenzelektrode (10) zumindest ein Materialbestandteil verwendet wird, der aus der folgenden Gruppe ausgewählt ist: Metalle, Metalloxide sowie Gemische daraus.

18. Verfahren nach einem der Ansprüche 11 bis 17, **dadurch gekennzeichnet, dass** für die Arbeitselektrode (12) zumindest ein Materialbestandteil verwendet wird, der aus der folgenden Gruppe ausgewählt ist: Edelmetalle, Edelmetalllegierungen, Oxide, Oxidgemische sowie Gemische daraus.

19. Verfahren nach einem der Ansprüche 11 bis 18 **dadurch gekennzeichnet, dass** es weiterhin den folgenden Schritt umfasst:
- Wählen der katalytischen Aktivität der Arbeitselektrode (12) derart, dass der Gassensor (auch) zur Messung von λ-Werten geeignet ist, die unter 0,9, bevorzugt unter 0,6 und weiter bevorzugt unter 0,4 liegen.
